(19) Europäisches Patentamt
European Patent Office
Office européen des brevets

(11) EP 4 811 437 A1

(12) EUROPEAN PATENT APPLICATION
published in accordance with Art. 153(4) EPC

(43) Date of publication:
**23.09.2026 Bulletin 2026/39**

(21) Application number: **24895403.4**

(22) Date of filing: **09.05.2024**

(51) International Patent Classification (IPC):
***H01M 4/131*** *(2010.01)* ***H01M 4/136*** *(2010.01)*
***H01M 10/0525*** *(2010.01)*

(52) Cooperative Patent Classification (CPC):
**H01M 4/02; H01M 4/13; H01M 4/131; H01M 4/136; H01M 4/66; H01M 10/05; H01M 10/0525;**
Y02E 60/10

(86) International application number:
**PCT/CN2024/091995**

(87) International publication number:
**WO 2025/112292 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.11.2023 CN 202311606664**

(71) Applicant: **Contemporary Amperex Technology Co., Limited**
**Ningde, Fujian 352100 (CN)**

(72) Inventors:
- **LIU, Xianghui**
  **Ningde, Fujian 352100 (CN)**
- **LIU, Xin**
  **Ningde, Fujian 352100 (CN)**
- **HUANG, Qisen**
  **Ningde, Fujian 352100 (CN)**
- **LI, Mingling**
  **Ningde, Fujian 352100 (CN)**
- **CAI, Qiguo**
  **Ningde, Fujian 352100 (CN)**
- **LI, Cheng**
  **Ningde, Fujian 352100 (CN)**

(74) Representative: **Gong, Jinping**
**CocreateIP**
**Neumarkter Straße 21**
**81673 München (DE)**

# (54) POSITIVE ELECTRODE COMPOSITE CURRENT COLLECTOR, POSITIVE ELECTRODE SHEET, SECONDARY BATTERY, AND ELECTRICAL APPARATUS

(57) A positive electrode composite current collector, a positive electrode sheet, a secondary battery, and an electrical apparatus are provided. The positive electrode composite current collector includes a polymer support layer, a conductive layer, and a high-resistance layer. The conductive layer is disposed on at least one surface of the polymer support layer; and the high-resistance layer is disposed on a surface of the conductive layer facing away from the polymer support layer, where a resistivity of the high-resistance layer is higher than a resistivity of the conductive layer, a total sheet resistance of the high-resistance layer and the conductive layer is R1, and 50 mΩ/□ ≤ R1 ≤ 80 mΩ/□. The positive electrode composite current collector can maintain normal electrode conductivity and keep the DCR of the battery within an appropriate range while enabling the battery to achieve a high nail penetration test pass rate, thereby improving the safety performance of the battery.

2
21
13
12
15
14
11
14
15
12
13
21
FIG. 2

EP 4 811 437 A1

## Description

### CROSS-REFERENCE

This application incorporates by reference in its entirety Chinese Patent Application No. 202311606664.8, filed on November 27, 2023 and entitled "POSITIVE ELECTRODE COMPOSITE CURRENT COLLECTOR, POSITIVE ELECTRODE SHEET, SECONDARY BATTERY, AND ELECTRICAL APPARATUS."

### TECHNICAL FIELD

This application relates to the field of secondary battery technologies, and in particular, to a positive electrode composite current collector, a positive electrode sheet, a secondary battery, and an electrical apparatus.

### BACKGROUND

The statements herein merely provide background information related to this application and do not necessarily constitute prior art.

In recent years, with the increasingly wide application of secondary batteries, secondary batteries are extensively used in energy storage power systems such as hydroelectric, thermal, wind, and solar power stations, as well as in various fields including power tools, electric bicycles, electric motorcycles, and electric vehicles.

Currently, due to significant advancements in secondary batteries, higher requirements have been placed on their safety performance. Secondary batteries with relatively good safety performance impose stringent requirements on current collectors. For example, secondary batteries with relatively good safety performance require that the current collector can effectively prevent conduction between the positive and negative electrodes during nail penetration tests.

Therefore, developing a current collector capable of improving the safety performance of secondary batteries is one of the key focuses for those skilled in the art.

### SUMMARY

This application is made in view of the above issues, with one of its objectives being to provide a positive electrode composite current collector that can enhance the safety performance of the battery while maintaining the battery's direct current resistance (DCR) at a low level.

To achieve the above objective, a first aspect of this application provides a positive electrode composite current collector, including:

a polymer support layer;
a conductive layer disposed on at least one surface of the polymer support layer; and
a high-resistance layer disposed on a surface of the conductive layer facing away from the polymer support layer, where a resistivity of the high-resistance layer is higher than a resistivity of the conductive layer, a total sheet resistance of the high-resistance layer and the conductive layer is R1, and $50\ m\Omega/\square \leq R1 \leq 80\ m\Omega/\square$.

By disposing the high-resistance layer on the surface of the conductive layer facing away from the polymer support layer, with the resistivity of the high-resistance layer being higher than that of the conductive layer, and the total sheet resistance R1 of the high-resistance layer and the conductive layer meeting $50\ m\Omega/\square \leq R1 \leq 80\ m\Omega/\square$, such a composite structure of the high-resistance layer and the conductive layer can maintain normal electrode conductivity of the conductive layer and keep the direct current resistance (DCR) of the battery within an appropriate range while enabling the battery to achieve a high nail penetration test pass rate, thereby improving the safety performance of the battery.

In any embodiment, $58\ m\Omega/\square \leq R1 \leq 70\ m\Omega/\square$. This allows for better balancing of electrode conductivity and nail penetration test pass rate, enabling the battery to meet DCR requirements while improving the safety performance.

In any embodiment, a sheet resistance of the conductive layer is R2, and $25\ m\Omega/\square \leq R2 \leq 45\ m\Omega/\square$; optionally, $30\ m\Omega/\square \leq R2 \leq 40\ m\Omega/\square$. This ensures that the conductive layer has an appropriate sheet resistance, which, when combined with the high-resistance layer, allows the total sheet resistance of the high-resistance layer and the conductive layer to be within an appropriate range.

In any embodiment, a thickness ratio of the conductive layer to the high-resistance layer is A, and $2 \leq A \leq 25$; optionally, $2.5 \leq A \leq 20$. This can ensure that the total sheet resistance of the conductive layer and the high-resistance layer is within an appropriate range, enabling the battery to pass nail penetration tests effectively and improve the safety performance.

In any embodiment, a thickness of the conductive layer is D1, and $500\ nm \leq D1 \leq 1500\ nm$; optionally, $600\ nm \leq D1$

≤ 1200 nm. This, in combination with the aforementioned thickness ratio of the conductive layer to the high-resistance layer, can ensure that the total sheet resistance of the conductive layer and the high-resistance layer is within an appropriate range, enabling the battery to pass nail penetration tests effectively and improve the safety performance.

In any embodiment, a thickness of the high-resistance layer is D2, and 30 nm ≤ D2 ≤ 500 nm; optionally, 35 nm ≤ D2 ≤ 400 nm. This, in combination with the aforementioned thickness ratio of the conductive layer to the high-resistance layer and the thickness range of the conductive layer, can ensure that the total sheet resistance of the conductive layer and the high-resistance layer is within an appropriate range, enabling the battery to pass nail penetration tests effectively and improve the safety performance.

In any embodiment, a total density of the conductive layer and the high-resistance layer is M1, and 70% ≤ M1 ≤ 95%; optionally, 75% ≤ M1 ≤ 90%. By controlling the thicknesses and densities of the conductive layer and the high-resistance layer, the total sheet resistance of the conductive layer and the high-resistance layer can be kept within an appropriate range, enabling the battery to achieve a relatively high nail penetration test pass rate and improve the safety performance. Additionally, controlling the total density of the conductive layer and the high-resistance layer within the above range can enable the composite current collector to have appropriate elongation at break and tensile strength.

In any embodiment, a density of the conductive layer is M2, and 50% ≤ M2 ≤ 75%; optionally, 55% ≤ M2 ≤ 70%. This allows the conductive layer, in combination with the high-resistance layer, to achieve a total sheet resistance within an appropriate range, keeps the DCR of the battery at an appropriate level, and improves the nail penetration test pass rate and safety performance of the battery.

In any embodiment, a material of the high-resistance layer includes one or more of aluminum oxide, silicon oxide, nickel-chromium alloy, and iron-chromium-aluminum alloy. These high-resistance layer materials have a relatively high resistivity, enabling, in combination with the conductive layer, the high-resistance layer and the conductive layer to have an appropriate total sheet resistance when combined.

In any embodiment, a material of the conductive layer includes one or more of aluminum, aluminum alloy, nickel, nickel alloy, titanium, titanium alloy, silver, and silver alloy.

In any embodiment, a surface roughness Rz of a surface of the high-resistance layer facing away from the conductive layer is 0.1 μm to 2 μm. Controlling the surface roughness of the high-resistance layer within the above range can enable the positive electrode active material layer of the positive electrode sheet and the positive electrode composite current collector to have relatively good adhesion, allowing the positive electrode sheet to withstand greater shear forces.

In any embodiment, the positive electrode composite current collector further includes an adhesive layer, where the adhesive layer is disposed between the polymer support layer and the conductive layer. By using the adhesive layer to bond the conductive layer to the polymer support layer, compared to conventional methods of depositing the conductive layer on the polymer support layer via evaporation or sputtering, significant thermal damage to the polymer support layer is avoided, thereby improving the elongation at break of the positive electrode composite current collector.

In any embodiment, the adhesive layer includes an adhesive, where the adhesive includes one or more of a composition containing multifunctional isocyanate and polyester polyol compounds, polyurethane, epoxy resin, polyacrylate, polyvinyl acetate, unsaturated polyester, phenolic resin, urea-formaldehyde resin, modified polyolefin resin, silicone resin, ethylene-acrylic acid copolymer, ethylene-vinyl acetate copolymer, ethylene-vinyl alcohol copolymer, acrylic resin, polycarbonate, and polyamide. These adhesives can provide strong bonding between the polymer support layer and the conductive layer, resulting in a relatively high peel strength between the conductive layer and the polymer support layer.

In any embodiment, a thickness of the adhesive layer is D3, and 200 nm ≤ D3 ≤ 1500 nm; optionally, 300 nm ≤ D3 ≤ 700 nm. This can ensure strong adhesion between the polymer support layer and the conductive layer and can also prevent the adhesive layer from being too thick, which could affect the energy density of the battery.

In any embodiment, the positive electrode composite current collector further includes a passivation layer, where the passivation layer is disposed between the adhesive layer and the conductive layer. This can provide passivation protection at the interface between the conductive layer and the adhesive layer and can reduce micro-corrosion of the conductive layer by the electrolytic solution.

In any embodiment, a material of the passivation layer includes one or more of chromate, dichromate, organic phosphonate, $Al_2O_3$, $SiO_2$, and $Si_3N_4$. Using these materials to form a passivation layer at the interface between the conductive layer and the adhesive layer can provide effective passivation protection and effectively mitigate micro-corrosion of the conductive layer by the electrolytic solution.

In any embodiment, the chromate includes one or more of sodium chromate, potassium chromate, magnesium chromate, and silver chromate; the dichromate includes one or more of sodium dichromate, potassium dichromate, magnesium dichromate, and silver dichromate; and the organic phosphonate includes one or more of hydroxyethylidene diphosphonic acid, diethylenetriamine penta(methylene phosphonic acid), triethylenetetramine hexa(methylene phosphonic acid), and ethylenediamine tetra(methylene phosphonic acid).

In any embodiment, a thickness of the passivation layer is D4, and 1 nm ≤ D4 ≤ 500 nm; optionally, 10 nm ≤ D4 ≤ 200 nm. This can effectively mitigate micro-corrosion of the conductive layer by the electrolytic solution.

In any embodiment, a material of the polymer support layer includes one or more of polyamide, polyimide, polyethylene terephthalate, polybutylene terephthalate, polyethylene naphthalate, polycarbonate, polyethylene, polypropylene, polypropylene-styrene copolymer, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene oxide, polyphenylene sulfide, polyethylene glycol, polysulfide nitride polymer materials, polybenzene, polypyrrole, polyaniline, polythiophene, polypyridine, cellulose, starch, protein, epoxy resin, phenolic resin, and their derivatives, cross-linked products, or copolymers. Using these materials as the polymer support layer, compared to conventional metal foil current collectors such as aluminum foil, can effectively improve the safety and energy density of the battery while reducing the cost of the current collector.

In any embodiment, a thickness of the polymer support layer is D5, and $2\ \mu m \leq D5 \leq 40\ \mu m$; optionally, $3\ \mu m \leq D5 \leq 8\ \mu m$. This can enable the battery using the positive electrode composite current collector to have relatively high energy density and relatively good safety.

A second aspect of this application further provides a positive electrode sheet, including a positive electrode active material layer and the positive electrode composite current collector according to the first aspect of this application, where the positive electrode active material layer is disposed on a surface of the high-resistance layer facing away from the conductive layer. In this way, the positive electrode sheet, while maintaining normal electrode conductivity of the conductive layer and keeping the DCR of the battery within an appropriate range, can enable the battery to achieve a relatively high nail penetration test pass rate, thereby improving the safety performance of the battery.

A third aspect of this application further provides a secondary battery, including the positive electrode composite current collector according to the first aspect of this application or the positive electrode sheet according to the second aspect of this application. In this way, the secondary battery has a relatively high nail penetration test pass rate, relatively good safety performance, and a relatively low DCR.

A fourth aspect of this application further provides an electrical apparatus, including the secondary battery according to the third aspect of this application.

Details of one or more embodiments of this application are set forth in the accompanying drawings and description below. Other features, objectives, and advantages of this application will become apparent from the description, accompanying drawings, and claims.

## BRIEF DESCRIPTION OF DRAWINGS

To better describe and illustrate the embodiments or examples provided in this application, reference may be made to one or more of the accompanying drawings. The additional details or examples used to describe the drawings should not be considered as limiting the scope of the disclosed application, the presently described embodiments or examples, or the presently understood best mode of these applications. In the accompanying drawings, the same reference signs denote the same components. In the accompanying drawings:

FIG. 1 is a schematic diagram of a positive electrode composite current collector according to an embodiment of this application;
FIG. 2 is a schematic diagram of a positive electrode sheet according to an embodiment of this application;
FIG. 3 is a schematic diagram of a battery cell according to an embodiment of this application;
FIG. 4 is an exploded view of the battery cell according to the embodiment of this application shown in FIG. 3; and
FIG. 5 is a schematic diagram of an electrical apparatus using a secondary battery as a power source according to an embodiment of this application.

Description of reference signs:
1: positive electrode composite current collector; 11: polymer support layer; 12: conductive layer; 13: high-resistance layer; 14: adhesive layer; 15: passivation layer; 2: positive electrode sheet; 21: positive electrode active material layer; 5: battery cell; 51: shell; 52: electrode assembly; 53: cover plate; and 6: electrical apparatus.

## DESCRIPTION OF EMBODIMENTS

Hereinafter, embodiments of the composite current collector, electrode sheet, secondary battery, and electrical apparatus of this application are described in detail with appropriate reference to the accompanying drawings. However, unnecessary detailed descriptions may be omitted. For example, detailed descriptions of well-known matters or repetitive descriptions of substantially identical structures may be omitted. This is to avoid unnecessary verbosity in the following description and to facilitate understanding by those skilled in the art. Furthermore, the accompanying drawings and the following description are provided to enable those skilled in the art to fully understand this application and are not intended to limit the subject matter recited in the claims.

The "ranges" disclosed in this application are defined in the form of lower and upper limits, where a given range is defined by selecting a lower limit and an upper limit, and the selected lower and upper limits define the boundaries of a particular range. Ranges defined in this manner may include or exclude the endpoints, and any endpoint may be independently included or excluded, with any combination possible, meaning that any lower limit can be combined with any upper limit to form a range. For example, if ranges of 60 to 120 and 80 to 110 are listed for a specific parameter, it is understood that ranges of 60 to 110 and 80 to 120 are also contemplated. Additionally, if minimum range values of 1 and 2 are listed, and maximum range values of 3, 4, and 5 are listed, the following ranges are all contemplated: 1 to 3, 1 to 4, 1 to 5, 2 to 3, 2 to 4, and 2 to 5. In this application, unless otherwise specified, the numerical range "a to b" represents an abbreviated representation of any combination of real numbers between a and b, where both a and b are real numbers. For example, the numerical range "0 to 5" means that all real numbers between "0 to 5" have been listed herein, and "0 to 5" is merely an abbreviated representation of these numerical combinations. Additionally, when a parameter is expressed as an integer ≥ 2, it is equivalent to listing that the parameter is, for example, the integer 2, 3, 4, 5, 6, 7, 8, 9, 10, 11, 12, and so forth. For example, when a parameter is expressed as an integer selected from "2 to 10," it is equivalent to listing the integers 2, 3, 4, 5, 6, 7, 8, 9, and 10.

In this application, references to "multiple," "a plurality," and the like, unless otherwise specified, mean a quantity greater than or equal to 2. For example, "one or more" means one or more than one.

Unless otherwise specified, all embodiments and optional embodiments of this application can be combined with each other to form new technical solutions.

Reference to "embodiment" herein means that a particular feature, structure, or characteristic described in connection with the embodiment may be included in at least one embodiment or implementation of this application. The appearances of this phrase in various places in the specification do not necessarily refer to the same embodiment, nor are they independent or alternative embodiments mutually exclusive of other embodiments. Those skilled in the art explicitly and implicitly understand that the embodiments described herein can be combined with other embodiments. References to "implementation" herein have a similar understanding.

Those skilled in the art can understand that in the methods of various embodiments or implementations, the order in which steps are described does not imply a strict execution sequence that imposes any limitation on the implementation process. The specific execution sequence of the various steps should be determined based on their functions and possible inherent logics. Unless otherwise specified, all steps in this application can be performed sequentially or randomly, preferably sequentially. For example, if a method includes steps (a) and (b), it means the method may include steps (a) and (b) performed sequentially, or steps (b) and (a) performed sequentially. For example, if it is mentioned that the method may further include step (c), it means step (c) may be added to the method in any order, for example, the method may include steps (a), (b), and (c), or steps (a), (c), and (b), or steps (c), (a), and (b), and so forth.

In this application, technical features or solutions described with terms such as "containing," "including," or "comprising," unless otherwise specified, do not exclude additional members beyond those listed and can be regarded as providing both closed features or solutions consisting of the listed members and open features or solutions including additional members beyond those listed. For example, if A includes a1, a2, and a3, unless otherwise specified, it may include other members or may not include additional members, and can be regarded as providing both the feature or solution where "A consists of a1, a2, and a3" and the feature or solution where "A includes a1, a2, and a3, as well as other members." In this application, unless otherwise specified, A (for example, B) means that B is a non-limiting example of A, and it can be understood that A is not limited to B.

In this application, "optionally," "optional," or "optional" means that something may or may not be present, that is, it refers to either of the two parallel options of "present" or "absent." If multiple "optional" instances appear in a technical solution, unless otherwise specified and there is no contradiction or mutual constraint, each "optional" instance is independent.

The weight mentioned in the description of the embodiments of this application may be a weight unit commonly known in the chemical field, such as μg, mg, g, or kg.

Currently, due to significant advancements in secondary batteries, higher requirements have been placed on their safety performance. Secondary batteries with relatively good safety performance impose stringent requirements on current collectors. For example, secondary batteries with relatively good safety performance require that the current collector can effectively prevent conduction between the positive and negative electrodes during nail penetration tests, thereby increasing the nail penetration test pass rate. To this end, this application, by improving the structure of the positive electrode composite current collector, increases the pass rate of batteries using this positive electrode composite current collector in nail penetration tests and improves the safety performance of the battery.

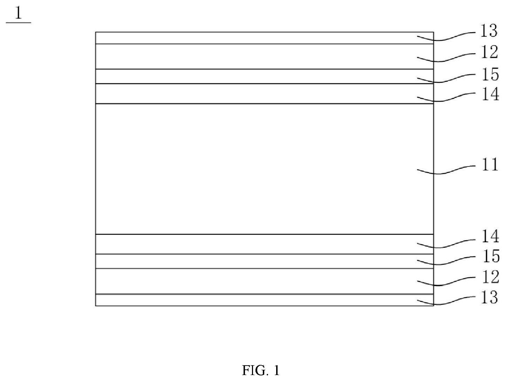

Referring to FIG. 1, a first aspect of this application provides a positive electrode composite current collector 1, where the positive electrode composite current collector 1 includes a polymer support layer 11, a conductive layer 12, and a high-resistance layer 13. The conductive layer 12 is disposed on at least one surface of the polymer support layer 11, and the high-resistance layer 13 is disposed on a surface of the conductive layer 12 facing away from the polymer support layer 11. A resistivity of the high-resistance layer 13 is higher than a resistivity of the conductive layer 12, a total sheet resistance

of the high-resistance layer 13 and the conductive layer 12 is R1, and 50 mΩ/□ ≤ R1 ≤ 80 mΩ/□.

By disposing the high-resistance layer 13 on the surface of the conductive layer 12 facing away from the polymer support layer 11, with the resistivity of the high-resistance layer 13 being higher than that of the conductive layer 12, and the total sheet resistance R1 of the high-resistance layer 13 and the conductive layer 12 meeting 50 mΩ/□ ≤ R1 ≤ 80 mΩ/□, such a composite structure of the high-resistance layer 13 and the conductive layer 12 increases the sheet resistance of the conductive layer 12 while maintaining normal electrode conductivity of the conductive layer 12 and keeping the DCR of the battery within an appropriate range, thereby improving the nail penetration test pass rate of batteries using the positive electrode composite current collector 1 and enhancing the safety performance of the battery.

It should be noted that resistivity is a physical quantity used to indicate the degree to which a material impedes the flow of current. The magnitude of resistivity is related to the inherent properties of the material. The resistivity of the high-resistance layer 13 being higher than that of the conductive layer 12 means that, under the same conditions, the material of the high-resistance layer 13 impedes current flow more than the material of the conductive layer 12. Sheet resistance refers to the resistance of a film material with a specific thickness and equal length and width. The total sheet resistance of the high-resistance layer 13 and the conductive layer 12 refers to a sheet resistance measured when the high-resistance layer 13 and the conductive layer 12 are treated as a single integrated film layer.

It can be understood that the conductive layer 12 and the high-resistance layer 13 may be disposed on one surface of the polymer support layer 11, or the conductive layer 12 and the high-resistance layer 13 may be disposed on two opposing surfaces of the polymer support layer 11. It can be understood that the total sheet resistance R1 of the high-resistance layer 13 and the conductive layer 12 in this application may include, but is not limited to, 50 mΩ/□, 51 mΩ/□, 52 mΩ/□, 53 mΩ/□, 54 mΩ/□, 55 mΩ/□, 56 mΩ/□, 57 mΩ/□, 58 mΩ/□, 59 mΩ/□, 60 mΩ/□, 61 mΩ/□, 62 mΩ/□, 63 mΩ/□, 64 mΩ/□, 65 mΩ/□, 66 mΩ/□, 67 mΩ/□, 68 mΩ/□, 69 mΩ/□, 70 mΩ/□, 71 mΩ/□, 72 mΩ/□, 73 mΩ/□, 74 mΩ/□, 75 mΩ/□, 76 mΩ/□, 77 mΩ/□, 78 mΩ/□, 79 mΩ/□, or 80 mΩ/□.

In some embodiments, 58 mΩ/□ ≤ R1 ≤ 70 mΩ/□. Controlling the total sheet resistance R1 of the high-resistance layer 13 and the conductive layer 12 in the positive electrode composite current collector 1 within the range of 58 mΩ/□ to 70 mΩ/□ allows for better balancing of electrode conductivity and nail penetration test pass rate, enabling the battery to meet DCR requirements while improving the safety performance.

In some embodiments, a sheet resistance of the conductive layer 12 is R2, and 25 mΩ/□ ≤ R2 ≤ 45 mΩ/□; optionally, 30 mΩ/□ ≤ R2 ≤ 40 mΩ/□. This ensures that the conductive layer 12 has an appropriate sheet resistance, which, when combined with the high-resistance layer 13, allows the total sheet resistance R1 of the high-resistance layer 13 and the conductive layer 12 to be within an appropriate range. It can be understood that R2 may include, but is not limited to, 25 mΩ/□, 26 mΩ/□, 27 mΩ/□, 28 mΩ/□, 29 mΩ/□, 30 mΩ/□, 31 mΩ/□, 32 mΩ/□, 33 mΩ/□, 34 mΩ/□, 35 mΩ/□, 36 mΩ/□, 37 mΩ/□, 38 mΩ/□, 39 mΩ/□, 40 mΩ/□, 41 mΩ/□, 42 mΩ/□, 43 mΩ/□, 44 mΩ/□, or 45 mΩ/□.

In some embodiments, the thickness ratio of the conductive layer 12 to the high-resistance layer 13 is A, and 2 ≤ A ≤ 25; the thickness of the conductive layer 12 is D1, and 500 nm ≤ D1 ≤ 1500 nm; and the thickness of the high-resistance layer 13 is D2, and 30 nm ≤ D2 ≤ 500 nm. Controlling the thickness of the conductive layer 12, the thickness of the high-resistance layer 13, and the thickness ratio of the conductive layer 12 to the high-resistance layer 13 within the above ranges ensures that the total sheet resistance of the conductive layer 12 and the high-resistance layer 13 is within an appropriate range, enabling the battery to pass nail penetration tests effectively and improve the safety performance.

It can be understood that A may include, but is not limited to, 2, 3, 4, 5, 6, 7, 8, 9, 10, 11, 12, 13, 14, 15, 16, 17, 18, 19, 20, 21, 22, 23, 24, or 25; D1 may include, but is not limited to, 500 nm, 550 nm, 600 nm, 650 nm, 700 nm, 750 nm, 800 nm, 850 nm, 900 nm, 950 nm, 1000 nm, 1050 nm, 1100 nm, 1150 nm, 1200 nm, 1250 nm, 1300 nm, 1350 nm, 1400 nm, 1450 nm, or 1500 nm; and D2 may include, but is not limited to, 30 nm, 50 nm, 80 nm, 100 nm, 120 nm, 150 nm, 180 nm, 200 nm, 220 nm, 250 nm, 280 nm, 300 nm, 320 nm, 350 nm, 380 nm, 400 nm, 420 nm, 450 nm, 480 nm, or 500 nm.

In some embodiments, a thickness ratio of the conductive layer 12 to the high-resistance layer 13 is A, and 2.5 ≤ A ≤ 20; a thickness of the conductive layer 12 is D1, and 600 nm ≤ D1 ≤ 1200 nm; and a thickness of the high-resistance layer 13 is D2, and 35 nm ≤ D2 ≤ 400 nm. Controlling the thickness of the conductive layer 12, the thickness of the high-resistance layer 13, and the thickness ratio of the conductive layer 12 to the high-resistance layer 13 within the above ranges can ensure that the total sheet resistance of the conductive layer 12 and the high-resistance layer 13 is within a more appropriate range, further improving the nail penetration test pass rate and the safety performance of the battery while enabling the battery to keep a better DCR level, thus better balancing the DCR and safety performance of the battery.

In some embodiments, a total density of the conductive layer 12 and the high-resistance layer 13 is M1, and 70% ≤ M1 ≤ 95%; optionally, 75% ≤ M1 ≤ 90%. The density of the conductive layer 12 and the high-resistance layer 13 affects their resistivity, which in turn affects the total sheet resistance of the conductive layer 12 and the high-resistance layer 13. When the thicknesses of the conductive layer 12 and the high-resistance layer 13 are within the ranges of this application, controlling the total density M1 of the conductive layer 12 and the high-resistance layer 13 within the above range can ensure that the total sheet resistance of the conductive layer 12 and the high-resistance layer 13 is within an appropriate range, thereby enabling the battery to achieve a relatively high nail penetration test pass rate and relatively good safety performance. Additionally, density affects the elongation at break and tensile strength of the positive electrode composite

current collector 1. Controlling the total density M1 of the conductive layer 12 and the high-resistance layer 13 within the above range can enable the positive electrode composite current collector 1 to have appropriate elongation at break and tensile strength.

It can be understood that the total density of the conductive layer 12 and the high-resistance layer 13 refers to a density measured when the conductive layer 12 and the high-resistance layer 13 are treated as a single integrated entity. The total density M1 of the conductive layer 12 and the high-resistance layer 13 may include, but is not limited to, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, or 95%.

In some embodiments, a density of the conductive layer 12 is M2, and $50\% \leq M2 \leq 75\%$; optionally, $55\% \leq M2 \leq 70\%$. Controlling the density of the conductive layer 12 within the above range can ensure that the conductive layer 12 has an appropriate resistivity and allow the high-resistance layer 13 to have an appropriate density. In combination with the high-resistance layer 13, this ensures that the total sheet resistance is within an appropriate range, keeps the DCR of the battery at an appropriate level, and enables the battery to have a relatively high nail penetration test pass rate. Additionally, this can enable the positive electrode composite current collector 1 to have appropriate elongation at break and tensile strength.

It can be understood that the density of the conductive layer 12 may include, but is not limited to, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, or 75%.

In some embodiments, a material of the high-resistance layer 13 includes one or more of aluminum oxide, silicon oxide, nickel-chromium alloy, and iron-chromium-aluminum alloy. These materials of the high-resistance layer 13 have a higher resistivity than the conductive layer 12, enabling, in combination with the conductive layer 12, the high-resistance layer 13 and the conductive layer 12 to have an appropriate total sheet resistance when combined.

In some embodiments, a material of the conductive layer 12 includes one or more of aluminum, aluminum alloy, nickel, nickel alloy, titanium, titanium alloy, silver, and silver alloy. It can be understood that the material type of the conductive layer 12 may be selected from the above materials based on the type of the positive electrode composite current collector 1. For example, when the positive electrode composite current collector 1 is a positive electrode current collector, the material of the conductive layer 12 may be aluminum; and when the positive electrode composite current collector 1 is a negative electrode current collector, the material of the conductive layer 12 may be copper.

In some embodiments, a surface roughness Rz of a surface of the high-resistance layer 13 facing away from the conductive layer 12 is 0.1 μm to 2 μm. During preparation of an electrode sheet using the positive electrode composite current collector 1 of this application, a corresponding positive electrode active material layer needs to be formed on the high-resistance layer 13, and the surface roughness of the high-resistance layer 13 affects the adhesion between the positive electrode active material layer and the positive electrode composite current collector 1. Controlling the surface roughness of the high-resistance layer 13 within the above range can enable the positive electrode active material layer of the positive electrode sheet and the positive electrode composite current collector 1 have relatively good adhesion, allowing the positive electrode sheet to withstand greater shear forces.

The surface roughness Rz refers to a sum of an average of five largest profile peak heights and an average of five largest profile valley depths within a sampling length. It can be understood that the surface roughness Rz of the high-resistance layer 13 may include, but is not limited to, 0.1 μm, 0.2 μm, 0.3 μm, 0.4 μm, 0.5 μm, 0.6 μm, 0.7 μm, 0.8 μm, 0.9 μm, 1.0 μm, 1.1 μm, 1.2 μm, 1.3 μm, 1.4 μm, 1.5 μm, 1.6 μm, 1.7 μm, 1.8 μm, 1.9 μm, or 2.0 μm.

In some embodiments, the positive electrode composite current collector 1 further includes an adhesive layer 14, where the adhesive layer 14 is disposed between the polymer support layer 11 and the conductive layer 12. For conventional positive electrode composite current collectors 1, the conductive layer 12 is typically formed on the polymer support layer 11 via evaporation or sputtering, which, due to the relatively high temperatures during formation of the conductive layer 12, causes significant thermal damage to the polymer support layer 11, leading to deformation of the positive electrode composite current collector 1 and low elongation at break of the positive electrode composite current collector 1. This application uses the adhesive layer 14 to bond the conductive layer 12 to the polymer support layer 11, avoiding significant thermal damage to the polymer support layer 11 and improving the elongation at break of the positive electrode composite current collector 1.

It can be understood that the adhesive layer 14 may be formed by applying and curing an adhesive slurry. In some specific examples, an adhesive slurry may be applied to the polymer support layer 11 and/or the conductive layer 12, the surfaces of the polymer support layer 11 and the conductive layer 12 coated with the adhesive slurry are laminated, and the adhesive slurry is then cured to form the adhesive layer 14, thereby bonding the polymer support layer 11 and the conductive layer 12 into an integrated structure. The conductive layer 12 may be a conductive metal foil of a certain thickness, and after the conductive metal foil is laminated to the polymer support layer 11 via the adhesive layer 14, the conductive metal foil may be thinned to the desired thickness of the conductive layer 12 by etching or other methods. After the conductive layer 12 is formed, the high-resistance layer 13 may be formed on the conductive layer 12 via evaporation or other methods.

In some embodiments, the adhesive layer 14 includes an adhesive, where the adhesive includes one or more of a composition containing multifunctional isocyanate and polyester polyol compounds, polyurethane, epoxy resin, polyacrylate, polyvinyl acetate, unsaturated polyester, phenolic resin, urea-formaldehyde resin, modified polyolefin resin, silicone resin, ethylene-acrylic acid copolymer, ethylene-vinyl acetate copolymer, ethylene-vinyl alcohol copolymer, acrylic resin, polycarbonate, and polyamide. Optionally, the adhesive includes one or more of a composition containing multifunctional isocyanate and polyester polyol compounds and polyurethane. In some specific examples, the polyurethane includes one or more of thermoplastic polyurethane and reactive polyurethane. These adhesives can provide strong bonding between the polymer support layer 11 and the conductive layer 12, resulting in a relatively high peel strength between the conductive layer 12 and the polymer support layer 11.

In some embodiments, a thickness of the adhesive layer 14 is D3, and 200 nm $\leq$ D3 $\leq$ 1500 nm; optionally, 300 nm $\leq$ D3 $\leq$ 700 nm. Controlling the thickness of the adhesive layer 14 within the above range can ensure strong adhesion between the polymer support layer 11 and the conductive layer 12 and can also prevent the adhesive layer 14 from being too thick, which could affect the energy density of the battery. It can be understood that the thickness D3 of the adhesive layer 14 may include, but is not limited to, 200 nm, 250 nm, 300 nm, 350 nm, 400 nm, 450 nm, 500 nm, 550 nm, 600 nm, 650 nm, 700 nm, 750 nm, 800 nm, 850 nm, 900 nm, 950 nm, 1000 nm, 1050 nm, 1100 nm, 1150 nm, 1200 nm, 1250 nm, 1300 nm, 1350 nm, 1400 nm, 1450 nm, or 1500 nm.

In some embodiments, the positive electrode composite current collector 1 further includes a passivation layer 15, where the passivation layer 15 is disposed between the adhesive layer 14 and the conductive layer 12. When the conductive layer 12 and the polymer support layer 11 of the positive electrode composite current collector 1 are bonded together via the adhesive layer 14 containing an adhesive, and the positive electrode composite current collector 1 is used in a battery, the electrolytic solution may penetrate between the adhesive layer 14 and the conductive layer 12, causing micro-corrosion of the conductive layer 12. In this application, disposing the passivation layer 15 between the adhesive layer 14 and the conductive layer 12, can provide passivation protection at an interface between the conductive layer 12 and the adhesive layer 14 and reduce micro-corrosion of the conductive layer 12 by the electrolytic solution.

In some embodiments, the material of the passivation layer 15 includes one or more of chromate, dichromate, organic phosphonate, $Al_2O_3$, $SiO_2$, and $Si_3N_4$. The chromate includes one or more of sodium chromate, potassium chromate, magnesium chromate, and silver chromate; the dichromate includes one or more of sodium dichromate, potassium dichromate, magnesium dichromate, and silver dichromate; and the organic phosphonate includes one or more of hydroxyethylidene diphosphonic acid (HEDP), diethylenetriamine penta(methylene phosphonic acid) (DETPMP), triethylenetetramine hexa(methylene phosphonic acid) (TETHMP), and ethylenediamine tetra(methylene phosphonic acid) (EDTMP). Using these materials to form the passivation layer 15 at the interface between the conductive layer 12 and the adhesive layer 14 can provide effective passivation protection for the conductive layer 12 and effectively mitigate micro-corrosion of the conductive layer 12 by the electrolytic solution.

In some embodiments, a thickness of the passivation layer 15 is D4, and 1 nm $\leq$ D4 $\leq$ 500 nm; optionally, 10 nm $\leq$ D4 $\leq$ 200 nm. Controlling the thickness of the passivation layer 15 within the above range can effectively mitigate micro-corrosion of the conductive layer 12 by the electrolytic solution. It can be understood that the thickness of the passivation layer 15 may include, but is not limited to, 1 nm, 5 nm, 10 nm, 20 nm, 30 nm, 50 nm, 80 nm, 100 nm, 120 nm, 140 nm, 150 nm, 160 nm, 180 nm, 200 nm, 220 nm, 240 nm, 250 nm, 260 nm, 280 nm, 300 nm, 320 nm, 340 nm, 350 nm, 360 nm, 380 nm, 400 nm, 420 nm, 440 nm, 450 nm, 460 nm, 480 nm, or 500 nm.

In some embodiments, a material of the polymer support layer 11 includes one or more of polyamide, polyimide, polyethylene terephthalate, polybutylene terephthalate, polyethylene naphthalate, polycarbonate, polyethylene, polypropylene, polypropylene-styrene copolymer, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene oxide, polyphenylene sulfide, polyethylene glycol, polysulfide nitride polymer materials, polybenzene, polypyrrole, polyaniline, polythiophene, polypyridine, cellulose, starch, protein, epoxy resin, phenolic resin, and their derivatives, cross-linked products, or copolymers. Using these materials as the polymer support layer 11 of the positive electrode composite current collector 1, compared to conventional metal foil current collectors such as copper foil or aluminum foil, can effectively improve the safety and energy density of the battery while reducing the cost of the current collector.

In some embodiments, the material of the polymer support layer 11 may further include one or more of metal materials and inorganic insulating materials. The inorganic insulating materials may include one or more of aluminum oxide, silicon carbide, and silicon dioxide. Adding the above inorganic insulating materials to the material of the polymer support layer 11 can further enhance the strength of the positive electrode composite current collector 1.

In some embodiments, a thickness of the polymer support layer 11 is D5, and 2 μm $\leq$ D5 $\leq$ 40 μm; optionally, 3 μm $\leq$ D5 $\leq$ 8 μm. Controlling the thickness of the polymer support layer 11 within the above range can enable the battery using the positive electrode composite current collector 1 to have relatively high energy density and relatively good safety. It can be understood that the thickness of the polymer support layer 11 may include, but is not limited to, 2 μm, 3 μm, 4 μm, 5 μm, 6 μm, 7 μm, 8 μm, 9 μm, 10 μm, 11 μm, 12 μm, 13 μm, 14 μm, 15 μm, 16 μm, 17 μm, 18 μm, 19 μm, 20 μm, 21 μm, 22 μm,

23 μm, 24 μm, 25 μm, 26 μm, 27 μm, 28 μm, 29 μm, 30 μm, 31 μm, 32 μm, 33 μm, 34 μm, 35 μm, 36 μm, 37 μm, 38 μm, 39 μm, or 40 μm.

In some embodiments, the positive electrode composite current collector 1 according to the first aspect of this application can be prepared by the following method: providing a polymer support layer 11 and a conductive layer 12; laminating the polymer support layer 11 and the conductive layer 12 using an adhesive slurry; curing the adhesive slurry to form an adhesive layer between the polymer support layer 11 and the conductive layer 12, where the adhesive slurry includes an adhesive; optionally thinning the conductive layer 12 by etching based on the thickness requirements of the conductive layer 12; and then forming a high-resistance layer 13 on the conductive layer 12 via evaporation. During the preparation of the positive electrode composite current collector 1, the thicknesses and densities of the conductive layer 12 and the high-resistance layer 13 are controlled to ensure that the total sheet resistance R1 of the conductive layer 12 and the high-resistance layer 13 is within the range of 50 mΩ/□ to 80 mΩ/□.

By disposing the high-resistance layer 13 on the surface of the conductive layer 12 facing away from the polymer support layer 11, with the total sheet resistance R1 of the high-resistance layer 13 and the conductive layer 12 meeting 50 mΩ/□ ≤ R1 ≤ 80 mΩ/□, the sheet resistance of the conductive layer 12 is increased while maintaining normal electrode conductivity of the conductive layer 12 and keeping the DCR of the battery within an appropriate range, thereby increasing the nail penetration test pass rate of batteries using the positive electrode composite current collector 1 and improving the safety performance of the battery. Additionally, by laminating the conductive layer 12 to the polymer support layer 11 via the adhesive layer 14, compared to conventional positive electrode composite current collectors 1 of the conductive layer 12 that is formed via evaporation or magnetron sputtering, the positive electrode composite current collector 1 prepared by the above method avoids significant thermal damage to the polymer support layer 11, resulting in a relatively high elongation at break of the positive electrode composite current collector 1.

In some embodiments, the polymer support layer 11 and the conductive layer 12 can be laminated by the following method: An adhesive slurry is applied to a metal foil serving as the conductive layer 12 via gravure coating, the metal foil coated with the adhesive slurry is baked in an oven at 80°C to 110°C, and then a surface of the baked metal foil coated with the adhesive slurry is thermally laminated to the polymer support layer 11. After curing the laminated current collector to ensure sufficient adhesion of the adhesive, the metal foil may be thinned by an etching process to achieve the desired thickness of the conductive layer 12, as needed. Alternatively, before lamination, a metal layer may be formed as the conductive layer 12 on a thick carrier via evaporation or electrolysis, the metal layer is peeled off from the thick carrier, and then the metal layer is laminated to the polymer support layer 11 by applying an adhesive slurry.

In some embodiments, before the adhesive slurry was applied to the conductive layer 12 via gravure coating, the surface of the conductive layer 12 to be coated with the adhesive slurry may be subjected to surface passivation treatment to form a passivation layer 15. Specifically, the passivation layer 15 may be formed by compounding a passivation material onto the conductive layer 12 via gravure printing, evaporation, or magnetron sputtering, followed by applying the adhesive slurry via gravure coating onto the passivation layer 15.

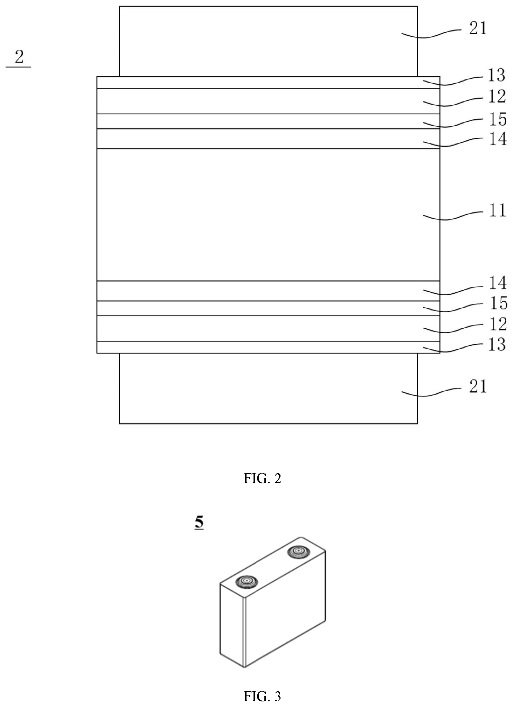

Referring to FIG. 2, in some embodiments, a second aspect of this application further provides a positive electrode sheet 2, where the positive electrode sheet 2 includes a positive electrode active material layer 21 and the positive electrode composite current collector 1 according to the first aspect of this application. The positive electrode active material layer 21 is disposed on a surface of the high-resistance layer 13 facing away from the conductive layer 12. In this way, by using the positive electrode composite current collector 1 according to the first aspect of this application, with the high-resistance layer 13 and the conductive layer 12 having an appropriate total sheet resistance, the positive electrode sheet 2 maintains normal electrode conductivity of the conductive layer 12 and keeps the DCR of the battery within an appropriate range, while enabling the battery to achieve a relatively high nail penetration test pass rate, thereby improving the safety performance of the battery.

In some embodiments, a third aspect of this application further provides a secondary battery, where the secondary battery includes the positive electrode composite current collector 1 according to the first aspect of this application or the positive electrode sheet 2 according to the second aspect of this application. This secondary battery has a relatively high nail penetration test pass rate, relatively good safety performance, and the DCR of the battery at an appropriate level.

In some embodiments, a fourth aspect of this application further provides an electrical apparatus, where the electrical apparatus includes the secondary battery according to the third aspect of this application.

The secondary battery and electrical apparatus of this application are described below with appropriate reference to the accompanying drawings.

Unless otherwise specified, the components, material types, or contents mentioned for batteries apply to both lithium-ion secondary batteries and sodium-ion secondary batteries.

In one embodiment of this application, a secondary battery is provided.

Typically, a secondary battery includes a positive electrode sheet, a negative electrode sheet, an electrolyte, and a separator. During battery charging and discharging, active ions intercalate and deintercalate back and forth between the positive electrode sheet and the negative electrode sheet. The electrolyte conducts ions between the positive electrode

sheet and the negative electrode sheet. The separator is disposed between the positive electrode sheet and the negative electrode sheet, primarily to prevent short-circuiting between the positive and negative electrodes while allowing ions to pass through.

Positive electrode sheet

The positive electrode sheet includes a positive electrode current collector and a positive electrode film layer disposed on at least one surface of the positive electrode current collector.

As a non-limiting example, the positive electrode current collector has two opposing surfaces in its thickness direction, and the positive electrode film layer is disposed on either or both of the two opposing surfaces of the positive electrode current collector.

In some embodiments, the positive electrode current collector may be the positive electrode composite current collector according to the first aspect of this application.

In some embodiments, the positive electrode active material may include positive electrode active materials known in the art for batteries.

As a non-limiting example, the positive electrode active material for a lithium-ion secondary battery may include one or more of the following materials: lithium-containing phosphates with an olivine structure, lithium transition metal oxides, and their respective modified compounds. However, this application is not limited to these materials, and other conventional materials that can be used as positive electrode active materials for batteries may also be used. These positive electrode active materials may be used alone or in combination of two or more. Examples of lithium transition metal oxides may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, and their modified compounds. Non-limiting examples of lithium-containing phosphates with an olivine structure may include, but are not limited to, one or more of lithium iron phosphate, lithium iron phosphate-carbon composites, lithium manganese phosphate, lithium manganese phosphate-carbon composites, lithium manganese iron phosphate, and lithium manganese iron phosphate-carbon composites. Non-limiting examples of lithium cobalt oxide may include $LiCoO_2$; non-limiting examples of lithium nickel oxide may include $LiNiO_2$; non-limiting examples of lithium manganese oxide may include $LiMnO_2$, $LiMn_2O_4$, and the like; non-limiting examples of lithium nickel cobalt manganese oxide may include $LiNi_{1/3}Co_{1/3}Mn_{1/3}O_2$ (also referred to as $NCM_{333}$ for short), $LiNi_{0.5}Co_{0.2}Mn_{0.3}O_2$ (also referred to as $NCM_{523}$ for short), $LiNi_{0.5}Co_{0.25}Mn_{0.25}O_2$ (also referred to as $NCM_{211}$ for short), $LiNi_{0.6}Co_{0.2}Mn_{0.2}O_2$ (also referred to as $NCM_{622}$ for short), $LiNi_{0.8}Co_{0.1}Mn_{0.1}O_2$ (also referred to as $NCM_{811}$ for short), and the like; and non-limiting examples of lithium nickel cobalt aluminum oxide may include $LiNi_{0.85}Co_{0.1}Al_{0.05}O_2$.

It can be understood that during battery charging and discharging, lithium (Li) intercalation and consumption occur, and the Li content in the positive electrode sheet varies depending on the discharge state of the battery. In this application, unless otherwise specified, the Li content in the listed positive electrode materials refers to the initial state of the material. When the positive electrode material is applied to the positive electrode sheet in a battery system, the Li content in the positive electrode material contained in the sheet usually changes after charge-discharge cycles. The Li content can be measured by molar content, but is not limited thereto. Regarding "the Li content refers to the initial state of the material", the initial state of the material refers to the state before being incorporated into the positive electrode slurry. It can be understood that new materials obtained by appropriate modification of the listed positive electrode materials are also within the scope of positive electrode materials, where the appropriate modification refers to acceptable modification methods for positive electrode materials, with non-limiting examples including enveloping modification.

In the positive electrode materials listed in this application, the oxygen (O) content is only a theoretical value, and lattice oxygen release may cause variations in the molar content of oxygen, resulting in fluctuations in the actual O content. The O content may be measured by molar content, but is not limited thereto.

As a non-limiting example, the positive electrode active material for a sodium-ion secondary battery may include one or more of the following materials: sodium transition metal oxides, polyanionic compounds, and Prussian blue compounds. However, this application is not limited to these materials, and other conventional materials that can be used as positive electrode active materials for sodium-ion batteries may also be used.

As an optional technical solution of this application, in sodium transition metal oxides, the transition metal may be one or more of Mn, Fe, Ni, Co, Cr, Cu, Ti, Zn, V, Zr, and Ce. Sodium transition metal oxides may include, for example, $Na_xMO_2$, where M is one or more of Ti, V, Mn, Co, Ni, Fe, Cr, and Cu, and $0 < x \leq 1$.

As an optional technical solution of this application, polyanionic compounds may be a class of compounds containing sodium ions, transition metal ions, and tetrahedral $(YO_4)^{n-}$ anionic units. The transition metal may be one or more of Mn, Fe, Ni, Co, Cr, Cu, Ti, Zn, V, Zr, and Ce; Y may be one or more of P, S, and Si; and n represents the valence state of $(YO_4)^{n-}$.

Polyanionic compounds may also be a class of compounds containing sodium ions, transition metal ions, tetrahedral $(YO_4)^{n-}$ anionic units, and halogen anions. The transition metal may be one or more of Mn, Fe, Ni, Co, Cr, Cu, Ti,

Zn, V, Zr, and Ce; Y may be one or more of P, S, and Si; n represents the valence state of $(YO_4)^{n-}$; and the halogen may be one or more of F, Cl, and Br.

Polyanionic compounds may also be a class of compounds containing sodium ions, tetrahedral $(YO_4)^{n-}$anionic units, polyhedral units $(ZO_y)^{m+}$, and optional halogen anions. Y may be one or more of P, S, and Si; n represents the valence state of $(YO_4)^{n-}$; Z represents a transition metal, which may be one or more of Mn, Fe, Ni, Co, Cr, Cu, Ti, Zn, V, Zr, and Ce; m represents the valence state of $(ZO_y)^{m+}$; and the halogen may be one or more of F, Cl, and Br.

Polyanionic compounds may include, for example, one or more of $NaFePO_4$, $Na_3V_2(PO_4)_3$ (sodium vanadium phosphate, abbreviated as NVP), $Na_4Fe_3(PO_4)_2(P_2O_7)$, $NaM'PO_4F$ (where M' is one or more of V, Fe, Mn, and Ni), and $Na_3(VO_y)_2(PO_4)_2F_{3-2y}$ ($0 \le y \le 1$).

Prussian blue compounds may be a class of compounds containing sodium ions, transition metal ions, and cyanide ions ($CN^-$). The transition metal may be one or more of Mn, Fe, Ni, Co, Cr, Cu, Ti, Zn, V, Zr, and Ce. Prussian blue compounds may include, for example, $Na_aMe_bMe'_c(CN)_6$, where Me and Me' are each independently one or more of Ni, Cu, Fe, Mn, Co, and Zn, $0 < a \le 2$, $0 < b < 1$, and $0 < c < 1$.

A weight percentage of the positive electrode active material in the positive electrode film layer is 80wt% to 100wt%, based on a total weight of the positive electrode film layer.

In some embodiments, the positive electrode film layer also optionally includes a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin. A weight percentage of the binder in the positive electrode film layer is 0wt% to 20wt%, based on the total weight of the positive electrode film layer.

In some embodiments, the positive electrode film layer also optionally includes a conductive agent. As a non-limiting example, the conductive agent may include one or more of superconducting carbon, acetylene black, carbon black, Ketjen black, carbon dots, carbon nanotubes, graphene, and carbon nanofibers. A weight percentage of the conductive agent in the positive electrode film layer is 0wt% to 20wt%, based on the total weight of the positive electrode film layer.

In some embodiments, the positive electrode sheet can be prepared by the following method: dispersing components for preparing the positive electrode sheet, such as a positive electrode active material, a conductive agent, a binder, and any other components, in a solvent (for example, N-methylpyrrolidone) to prepare a positive electrode slurry, where a solid content of the positive electrode slurry is 40wt% to 80wt%, and a viscosity at room temperature is adjusted to 5000 mPa·s to 25000 mPa·s; applying the positive electrode slurry on a surface of a positive electrode current collector, drying, and cold-pressing with a cold rolling machine to form a positive electrode sheet; where a coating weight per unit area of the positive electrode powder is 150 mg/m$^2$ to 350 mg/m$^2$, and a compacted density of the positive electrode sheet is 3.0 g/cm$^3$ to 3.6 g/cm$^3$, optionally 3.3 g/cm$^3$ to 3.5 g/cm$^3$.

The compacted density is calculated using the formula:

compacted density = coating weight per unit area / (thickness of the electrode sheet after pressing - thickness of the current collector).

A mass M of the positive electrode active material in the positive electrode film per unit area can be weighed using a standard balance.

A thickness T of the positive electrode film can be measured using a micrometer, for example, a Mitutoyo 293-100 micrometer with a precision of 0.1 μm. It should be noted that the thickness of the positive electrode film in this application refers to a thickness of the positive electrode film in the positive electrode sheet after cold pressing and used for assembling the battery.

Negative electrode sheet

The negative electrode sheet includes a negative electrode current collector and a negative electrode film layer disposed on at least one surface of the negative electrode current collector, where the negative electrode film layer includes a negative electrode active material.

As a non-limiting example, the negative electrode current collector has two opposing surfaces in its thickness direction, and the negative electrode film layer is disposed on either or both of the two opposing surfaces of the negative electrode current collector.

In some embodiments, the negative electrode current collector may be a metal foil or a composite current collector. For example, as a metal foil, copper foil may be used. The composite current collector may include a polymer material base layer and a metal layer formed on at least one surface of the polymer material base. The composite current

collector can be obtained by forming a metal material on the polymer material base. Non-limiting examples of the metal material in the negative electrode current collector may include one or more of copper, copper alloy, nickel, nickel alloy, titanium, titanium alloy, silver, and silver alloy. Non-limiting examples of the polymer material base in the negative electrode current collector may include one or more of polypropylene (PP), polyethylene terephthalate (PET), polybutylene terephthalate (PBT), polystyrene (PS), and polyethylene (PE).

In some embodiments, the negative electrode active material may include negative electrode active materials known in the art for batteries.

As a non-limiting example, the negative electrode active material for a lithium-ion secondary battery may include one or more of the following materials: artificial graphite, natural graphite, soft carbon, hard carbon, silicon-based materials, tin-based materials, and lithium titanate. Silicon-based materials may include one or more of elemental silicon, silicon-oxygen compounds, silicon-carbon composites, silicon-nitrogen composites, and silicon alloys. Tin-based materials may include one or more of elemental tin, tin-oxygen compounds, and tin alloys. However, this application is not limited to these materials, and other conventional materials that can be used as negative electrode active materials for batteries may also be used. These negative electrode active materials may be used alone or in combination of two or more.

As a non-limiting example, the negative electrode active material for a sodium-ion secondary battery is typically a hard carbon material, two-dimensional metal carbide, or nitride. Preferably, the negative electrode active material for a sodium-ion secondary battery is a hard carbon material.

In some embodiments, the negative electrode film layer also optionally includes a binder. The binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer also optionally includes a conductive agent. The conductive agent may include one or more of superconducting carbon, acetylene black, carbon black, Ketjen black, carbon dots, carbon nanotubes, graphene, and carbon nanofibers.

In some embodiments, the negative electrode film layer also optionally includes other additives, such as thickeners (for example, sodium carboxymethyl cellulose (CMC-Na)).

In some embodiments, the negative electrode sheet can be prepared by the following method: dispersing components for preparing the negative electrode sheet, such as a negative electrode active material, a conductive agent, a binder, and any other components, in a solvent (a non-limiting example of the solvent is deionized water) to prepare a negative electrode slurry; applying the negative electrode slurry on at least one surface of the negative electrode current collector, and performing processes such as drying and cold pressing to obtain a negative electrode sheet. The surface of the negative electrode current collector coated with the negative electrode slurry may be a single surface or both surfaces of the negative electrode current collector. A solid content of the negative electrode slurry may be 40wt% to 60wt%. A viscosity of the negative electrode slurry at room temperature may be adjusted to 2000 mPa·s to 10000 mPa·s. During the application of the negative electrode slurry, a coating weight per unit area (excluding the solvent) may be 75 g/m$^2$ to 220 g/m$^2$. A compacted density of the negative electrode sheet may be 1.0 g/cm$^3$ to 1.8 g/cm$^3$.

Electrolyte

The electrolyte conducts ions between the positive electrode sheet and the negative electrode sheet. This application does not impose specific limitations on the type of electrolyte, which can be selected based on requirements. For example, the electrolyte may be liquid, gel, or all-solid-state.

In some embodiments, the electrolyte is an electrolytic solution. The electrolytic solution includes an electrolyte salt and a solvent.

In some embodiments, the electrolyte salt for a lithium-ion secondary battery may include one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate ($LiPO_2F_2$), lithium difluoro bis(oxalato)phosphate (LiDFOP), and lithium tetrafluoro(oxalato)phosphate (LiTFOP).

In some embodiments, the solvent may include one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolytic solution also optionally includes additives. For example, the additives may include negative electrode film-forming additives, positive electrode film-forming additives, and additives that improve

certain battery performances, such as additives that improve overcharge performance, high-temperature performance, or low-temperature performance of the battery.

In some embodiments, the additives in the electrolytic solution may include, but are not limited to, one or more of fluoroethylene carbonate (FEC), difluoroethylene carbonate (DFEC), and trifluoromethyl ethylene carbonate (TFPC).

Separator

In some embodiments, the secondary battery further includes a separator. This application does not impose specific limitations on the type of separator, and any well-known porous structure separator with good chemical and mechanical stability may be used.

In some embodiments, a material of the separator may include one or more of glass fiber, non-woven fabric, polyethylene, polypropylene, and polyvinylidene fluoride. The separator may be a single-layer film or a multilayer composite film, with no particular limitation. When the separator is a multilayer composite film, the materials of various layers may be the same or different, with no particular limitation.

In some embodiments, a thickness of the separator is 6 μm to 40 μm, optionally 12 μm to 20 μm.

In some embodiments, the positive electrode sheet, the negative electrode sheet, and the separator may be formed into an electrode assembly through a winding process or a lamination process.

In some embodiments, the secondary battery may include an outer casing. The outer casing may be used to encapsulate the electrode assembly and the electrolyte.

In some embodiments, the outer casing of the secondary battery may be a hard shell, such as a hard plastic shell, aluminum shell, or steel shell. The outer casing of the secondary battery may also be a soft pack, such as a pouch-type soft pack. A material of the soft pack may be plastic, with non-limiting examples including one or more of polypropylene, polybutylene terephthalate, and polybutylene succinate.

The secondary battery includes at least one battery cell. The secondary battery may include one or more battery cells.

In this application, unless otherwise specified, a "battery cell" refers to a basic unit capable of converting chemical energy into electrical energy, further typically including at least a positive electrode sheet, a negative electrode sheet, and an electrolyte. During battery charging and discharging, active ions intercalate and deintercalate back and forth between the positive electrode sheet and the negative electrode sheet. The electrolyte conducts active ions between the positive electrode sheet and the negative electrode sheet.

This application does not impose specific limitations on the shape of the battery cell, which may be cylindrical, square, or any other shape. For example, FIG. 3 shows a battery cell 5 with a square structure as an example.

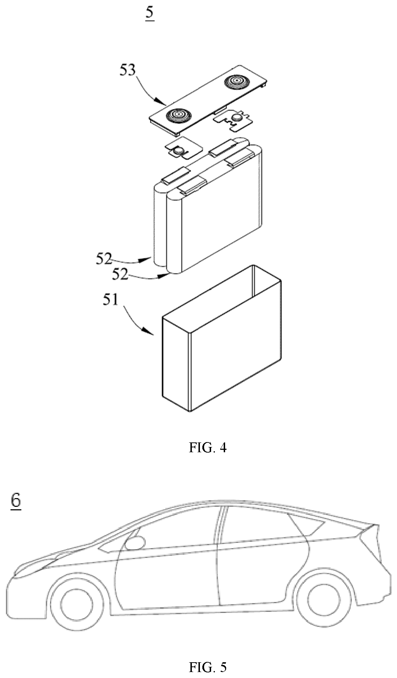

In some embodiments, referring to FIG. 4, the outer casing may include a shell 51 and a cover plate 53. The shell 51 may include a bottom plate and side plates connected to the bottom plate, with the bottom plate and side plates enclosing an accommodating cavity. The shell 51 has an opening communicating with the accommodating cavity, and the cover plate 53 can cover the opening to seal the accommodating cavity. The positive electrode sheet, the negative electrode sheet, and the separator may be formed into an electrode assembly 52 through a winding process or a lamination process. The electrode assembly 52 is encapsulated in the accommodating cavity. The electrolytic solution infiltrates the electrode assembly 52. The number of electrode assemblies 52 included in the battery cell 5 may be one or may be multiple, and those skilled in the art may select the number based on specific requirements.

In some embodiments, the battery cell 5 may be assembled into a battery module, and the number of battery cells 5 included in the battery module may be one or may be multiple, with the specific number selected by those skilled in the art based on the application and capacity of the battery module.

In the battery module, multiple battery cells 5 may be arranged sequentially along a length direction of the battery module. Alternatively, they may be arranged in any other manner. Further, the multiple battery cells 5 may be fixed using fasteners.

Optionally, the battery module may further include a housing with an accommodating space, and the multiple battery cells 5 are accommodated in the accommodating space.

In some embodiments, the above battery module may be assembled into a battery pack, and the number of battery modules included in the battery pack may be one or more, with the specific number selected by those skilled in the art based on the application and capacity of the battery pack.

The battery pack may include a battery box and multiple battery modules disposed in the battery box. The battery box includes an upper box body and a lower box body, with the upper box body covering the lower box body to form a closed space for accommodating the battery modules. The multiple battery modules may be arranged in the battery box in any manner.

Additionally, this application further provides an electrical apparatus, where the electrical apparatus includes at least one of the secondary battery, battery module, or battery pack provided in this application. The secondary battery, the battery module, or the battery pack may be used as a power source for the electrical apparatus or as an energy storage unit

for the electrical apparatus. The electrical apparatus may include, but is not limited to, mobile devices (for example, mobile phones, laptops), electric vehicles (for example, pure electric vehicles, hybrid electric vehicles, plug-in hybrid electric vehicles, electric bicycles, electric scooters, electric golf carts, electric trucks), electric trains, ships, satellites, and energy storage systems.

For the electrical apparatus, the secondary battery, the battery module, or the battery pack may be selected based on its usage requirements.

FIG. 5 shows an electrical apparatus 6 as an example. The electrical apparatus is a battery electric vehicle, hybrid electric vehicle, or plug-in hybrid electric vehicle. To meet the high power and high energy density requirements of the electrical apparatus for secondary batteries, a battery pack or battery module may be used.

As another example, the apparatus may be a mobile phone, tablet, laptop, or the like. Such devices typically require lightweight and thin designs and may use a battery cell as the power source.

The following are some embodiments.

To make the technical problems solved by this application, the technical solutions, and the beneficial effects clearer, this application is further described in detail below with reference to embodiments and drawings. It is apparent that the described embodiments are only some of the embodiments of this application, not all of them. The description of at least one exemplary embodiment below is merely illustrative and is not intended to limit this application or its applications. Based on the embodiments in this application, all other embodiments obtained by those of ordinary skill in the art without creative effort fall within the scope of protection of this application.

For embodiments where specific techniques or conditions are not specified, they are carried out according to techniques or conditions described in the literature in the field or according to product specifications. Reagents or instruments used without specifying the manufacturer are conventional products commercially available.

I. Examples and Comparative Examples

Example 1:

(1) Preparation of positive electrode sheet

(1.1) Preparation of positive electrode composite current collector

Aluminum foil was selected as the material for the conductive layer, a passivation solution of potassium dichromate was evenly applied on a surface of the aluminum foil via gravure printing to form a passivation layer with a thickness D4 of 100 nm; a polyurethane adhesive slurry was applied via gravure coating on the passivated surface of the aluminum foil; and the coated aluminum foil was baked in an oven and thermally laminate it with a polymer support layer with a thickness D5 of 6 μm to complete single-sided lamination. The polymer support layer was a polyamide support layer.

The same method was used to laminate aluminum foil on the other side of the polymer support layer. After laminating the aluminum foil, it was cured to ensure sufficient adhesion of the adhesive; then the aluminum foil was thinned by etching to obtain a conductive layer with a thickness D1 of 800 nm, a sheet resistance R2 of 35 mΩ/□, and a density M2 of 60%. The thickness D3 of the adhesive layer was 500 nm.

Aluminum oxide as the high-resistance layer was deposited on the conductive layers on both surfaces of the polymer support layer via evaporation. During evaporation, the thickness of the high-resistance layer was controlled by adjusting the feed rate of aluminum wire and the flow of oxygen, so that the thickness D2 of each high-resistance layer was 400 nm. A total density M1 of the high-resistance layer and the conductive layer was 95%, a total sheet resistance R1 of the high-resistance layer and the conductive layer was 80 mΩ/□, a thickness ratio A of the conductive layer to the high-resistance layer was 2, and a surface roughness Rz of the high-resistance layer was 1.5 μm.

(1.2) Preparation of positive electrode active material layer

A positive electrode active material NCM811, a conductive agent carbon black, and a binder styrene-butadiene rubber (SBR) latex were mixed at a mass ratio of 97:1.2:1.8 in the solvent N-methylpyrrolidone to prepare a uniform positive electrode slurry. The positive electrode slurry was applied on the high-resistance layers on both sides of the positive electrode composite current collector, followed by drying, cold pressing, slitting, and cutting processes to obtain a positive electrode sheet. A compacted density of the positive electrode sheet was 3.4 g/cm$^3$.

(2) Preparation of negative electrode sheet

A negative electrode active material graphite, a conductive agent carbon black, and a binder carboxymethyl cellulose (CMC) were mixed at a mass ratio of 98:1:1 in an appropriate amount of solvent deionized water to prepare a

uniform negative electrode slurry. The negative electrode slurry was applied on both sides of a 6 μm thick copper foil negative electrode current collector, followed by drying, cold pressing, slitting, and cutting processes to obtain a negative electrode sheet. A compacted density of the negative electrode sheet was 1.6 g/cm$^3$.

(3) Preparation of electrolytic solution

Ethylene carbonate (EC) and ethyl methyl carbonate (EMC) were mixed at a volume ratio of 3:7 to prepare an organic solvent, and fully dried $LiPF_6$ was dissolved in the organic solvent to prepare an electrolytic solution with a concentration of 1 mol/L.

(4) Separator

A polypropylene/polyethylene/polypropylene (PP/PE/PP) composite separator was used as the separator.

(5) Preparation of battery cell

The positive electrode sheet, the separator, and the negative electrode sheet were winded together to form a bare cell, with the separator positioned between the positive electrode sheet and the negative electrode sheet for isolation; roll welding and transfer welding were performed using double-sided metal edging to form tabs; the battery cell with welded tabs was placed into a battery shell, the electrolytic solution was injected, followed by sealing, formation, and other processes to obtain a lithium-ion secondary battery.

Example 2:

This example was substantially the same as Example 1, except that: the thickness D2 of the high-resistance layer in the positive electrode composite current collector was 320 nm, the total density M1 of the high-resistance layer and the conductive layer as 90%, the total sheet resistance R1 of the high-resistance layer and the conductive layer was 70 mΩ/□, the thickness ratio A of the conductive layer to the high-resistance layer was 2.5, and the surface roughness Rz of the high-resistance layer was 1.2 μm.

Example 3:

This example was substantially the same as Example 1, except that: the thickness D2 of the high-resistance layer in the positive electrode composite current collector was 160 nm, the total density M1 of the high-resistance layer and the conductive layer was 85%, the total sheet resistance R1 of the high-resistance layer and the conductive layer as 68 mΩ/□, the thickness ratio A of the conductive layer to the high-resistance layer was 5, and the surface roughness Rz of the high-resistance layer was 0.68 μm.

Example 4:

This example was substantially the same as Example 1, except that: the thickness D2 of the high-resistance layer in the positive electrode composite current collector was 80 nm, the total density M1 of the high-resistance layer and the conductive layer was 78%, the total sheet resistance R1 of the high-resistance layer and the conductive layer was 65 mΩ/□, the thickness ratio A of the conductive layer to the high-resistance layer was 10, and the surface roughness Rz of the high-resistance layer was 0.53 μm.

Example 5:

This example was substantially the same as Example 1, except that: the thickness D2 of the high-resistance layer in the positive electrode composite current collector was 40 nm, the total density M1 of the high-resistance layer and the conductive layer was 75%, the total sheet resistance R1 of the high-resistance layer and the conductive layer was 58 mΩ/□, the thickness ratio A of the conductive layer to the high-resistance layer was 20, and the surface roughness Rz of the high-resistance layer was 0.2 μm.

Example 6:

This example was substantially the same as Example 1, except that: the thickness D2 of the high-resistance layer in the positive electrode composite current collector was 32 nm, the total density M1 of the high-resistance layer and the

conductive layer was 70%, the total sheet resistance R1 of the high-resistance layer and the conductive layer was 50 mΩ/□, the thickness ratio A of the conductive layer to the high-resistance layer was 25, and the surface roughness Rz of the high-resistance layer was 0.1 μm.

Example 7:

This example was substantially the same as Example 3, except that: in the positive electrode composite current collector, the thickness D1 of the conductive layer was 500 nm, the density M2 of the conductive layer was 50%, the sheet resistance R2 of the conductive layer was 45 mΩ/□, the thickness D2 of the high-resistance layer was 100 nm, the total density M1 of the high-resistance layer and the conductive layer was 75%, the total sheet resistance R1 of the high-resistance layer and the conductive layer was 60 mΩ/□, and the surface roughness Rz of the high-resistance layer was 0.55 μm.

Example 8:

This example was substantially the same as Example 3, except that: in the positive electrode composite current collector, the thickness D1 of the conductive layer was 600 nm, the density M2 of the conductive layer was 55%, the sheet resistance R2 of the conductive layer was 40 mΩ/□, the thickness D2 of the high-resistance layer was 120 nm, the total density M1 of the high-resistance layer and the conductive layer was 80%, the total sheet resistance R1 of the high-resistance layer and the conductive layer was 61 mΩ/□, and the surface roughness Rz of the high-resistance layer was 0.6 μm.

Example 9:

This example was substantially the same as Example 3, except that: in the positive electrode composite current collector, the thickness D1 of the conductive layer was 1000 nm, the density M2 of the conductive layer was 65%, the sheet resistance R2 of the conductive layer was 30 mΩ/□, the thickness D2 of the high-resistance layer was 200 nm, the total density M1 of the high-resistance layer and the conductive layer was 87%, the total sheet resistance R1 of the high-resistance layer and the conductive layer was 66 mΩ/□, and the surface roughness Rz of the high-resistance layer was 0.8 μm.

Example 10:

This example was substantially the same as Example 3, except that: in the positive electrode composite current collector, the thickness D1 of the conductive layer was 1200 nm, the density M2 of the conductive layer was 70%, the sheet resistance R2 of the conductive layer was 28 mΩ/□, the thickness D2 of the high-resistance layer was 240 nm, the total density M1 of the high-resistance layer and the conductive layer was 90%, the total sheet resistance R1 of the high-resistance layer and the conductive layer was 56 mΩ/□, and the surface roughness Rz of the high-resistance layer was 0.9 μm.

Example 11:

This example was substantially the same as Example 3, except that: in the positive electrode composite current collector, the thickness D1 of the conductive layer was 1500 nm, the density M2 of the conductive layer was 75%, the sheet resistance R2 of the conductive layer was 25 mΩ/□, the thickness D2 of the high-resistance layer was 300 nm, the total density M1 of the high-resistance layer and the conductive layer was 95%, the total sheet resistance R1 of the high-resistance layer and the conductive layer was 50 mΩ/□, and the surface roughness Rz of the high-resistance layer was 1.1 μm.

Comparative Example 1:

This comparative example was substantially the same as Example 1, except that: in the positive electrode composite current collector, the thickness D2 of the high-resistance layer was 800 nm, the total density M1 of the high-resistance layer and the conductive layer was 100%, the total sheet resistance R1 of the high-resistance layer and the conductive layer was 100 mΩ/□, the thickness ratio A of the conductive layer to the high-resistance layer was 1, and the surface roughness Rz of the high-resistance layer was 2.2 μm.

Comparative Example 2:

This comparative example was substantially the same as Example 1, except that: in the positive electrode composite current collector, the thickness D2 of the high-resistance layer was 27 nm, the total density M1 of the high-resistance layer and the conductive layer was 63%, the total sheet resistance R1 of the high-resistance layer and the conductive layer was 37 mΩ/□, the thickness ratio A of the conductive layer to the high-resistance layer was 29.6, and the surface roughness Rz of the high-resistance layer was 0.08 μm.

Comparative Example 3:

This comparative example was substantially the same as Example 3, except that: in the positive electrode composite current collector, the thickness D1 of the conductive layer was 1600 nm, the density M2 of the conductive layer was 95%, the sheet resistance R2 of the conductive layer was 18 mΩ/□, the thickness D2 of the high-resistance layer was 320 nm, the total density M1 of the high-resistance layer and the conductive layer was 100%, the total sheet resistance R1 of the high-resistance layer and the conductive layer was 32 mΩ/□, and the surface roughness Rz of the high-resistance layer was 1.2 μm.

Comparative Example 4:

This comparative example was substantially the same as Example 3, except that: in the positive electrode composite current collector, the thickness D1 of the conductive layer was 400 nm, the density M2 of the conductive layer was 40%, the sheet resistance R2 of the conductive layer was 75 mΩ/□, the thickness D2 of the high-resistance layer was 80 nm, the total density M1 of the high-resistance layer and the conductive layer was 55%, the total sheet resistance R1 of the high-resistance layer and the conductive layer was 102 mΩ/□, and the surface roughness Rz of the high-resistance layer was 0.51 μm.

Comparative Example 5:

This comparative example as substantially the same as Example 3, except that: in the positive electrode composite current collector, no high-resistance layer was disposed on the conductive layer.

II. Test methods

(1) Test for thickness of film layer

A cross-sectional sample of the composite current collector was prepared using liquid nitrogen quenching or argon ion etching. The secondary electron morphology of the sample cross-section was observed using a scanning electron microscope at magnifications of 1000 to 30,000 times, and the thicknesses of the polymer support layer, conductive layer, high-resistance layer, adhesive layer, and passivation layer were measured. The minimum resolution could reach the nanometer level.

(2) Test for surface roughness Rz of high-resistance layer

A roughness tester was used to measure the surface roughness of the high-resistance layer and obtain the Rz value;

$$\text{Rz average} = (\text{sum of Rz values of 10 test points}) / 10.$$

(3) Test for density of conductive layer/high-resistance layer

A flat test sample was placed on the CCD optical microscope stage, the stage was illuminated from the back, the light source of the microscope was turned off, and photos of the sample were taken in dark-field conditions, three regions were captured; the three images were processed using ImageJ software, the images saved by the CCD were selected, and the density percentage M was calculated;

$$\text{M average} = (\text{sum of M values of three test regions}) / 3.$$

(4) Test for sheet resistance R of conductive layer/combined conductive and high-resistance layer

A flat sample was taken and a four-probe sheet resistance tester was used to measure the sheet resistance, to find the R value;

$$R \text{ average} = (\text{sum of R values of 10 test points}) / 10.$$

(5) Test for tensile strength and elongation at break of positive electrode composite current collector

A standard sampler was used to cut the sample into 10 strips, with each of 15 mm width and 15 cm length along the MD (machine direction) and TD (transverse direction); the sample was fixed in the clamps of a tensile testing machine, the speed was set to 50 mm/min, with a gauge length of 50 mm between the clamps, and test the strength and elongation at break;

$$\text{tensile strength} = (\text{sum of tensile strengths of 10 test samples}) / 10;$$

$$\text{elongation at break} = (\text{sum of elongations at break of 10 test samples}) / 10.$$

(6) Test for shear force of positive electrode sheet

A shear force-specific adhesive tape was attached to a steel plate, with the tape being 4 mm wide and 5 mm long, the positive electrode sheet was attached to the tape, and the shear force between the positive electrode active material layer and the positive electrode composite current collector was measured using a Goteck tensile testing machine;

$$\text{shear force average} = (\text{sum of shear force values of 10 samples}) / 10. \text{ (Shear force specification} \geq 0.3 \text{ MPa).}$$

(7) Test for U-shaped resistance of welded positive electrode sheet

The welded positive electrode sheet was cut into samples matching the size of the battery cell, and the resistance between the two tabs was measured using an internal resistance meter;

$$R \text{ average} = (\text{sum of U-shaped resistance values of 10 samples}) / 10.$$

(U-shaped resistance R specification: 70 mΩ to 130 mΩ, preferably 80 mΩ to 120 mΩ).

(8) Test for DCR of battery cell

The capacity of the battery cell was adjusted to 50% SOC and the voltage V1 was recorded; a 4C discharge current was applied for 30 seconds to obtain the voltage V2;

$$DCR = (V1 - V2) / 4C;$$

$$DCR \text{ average} = (\text{sum of DCR values of 10 samples}) / 10.$$

Typically, the battery cell DCR should be less than 0.7 mΩ, preferably less than 0.6 mΩ.

(9) Nail penetration test for battery cell

The battery cell was fully charged to 100% SOC, the positive and negative electrodes of the battery cell were connected to a power source to test the voltage, the large surface of the battery cell was penetrated through with a steel needle of 3 mm to 6 mm diameter at a certain speed, and whether the battery cell failed was determined by observing whether it smoked, caught fire, exploded, or experienced a sudden voltage drop. The nail penetration pass rate was calculated. nail penetration test data for five samples were collected.

nail penetration pass rate = (sum of the number of passing samples out of five) / 5 × 100%.

The parameters of batteries of the examples and comparative examples of this application are shown in Table 1, and the performance test data are shown in Table 2. In Table 1, "/" indicates absence.

**Table 1**

| Item | Positive electrode sheet | | | | | | | |
|---|---|---|---|---|---|---|---|---|
| | Thickness of conductive layer (nm) | Density of conductive layer (%) | Sheet resistance of conductive layer (mΩ/□) | Thickness of high-resistance layer (nm) | Total density of high-resistance layer and conductive layer (%) | Total sheet resistance of high-resistance layer and conductive layer (mΩ/□) | Thickness ratio of conductive layer to high-resistance layer | Surface roughness of high-resistance layer (μm) |
| Example 1 | 800 | 60 | 35 | 400 | 95 | 80 | 2 | 1.5 |
| Example 2 | 800 | 60 | 35 | 320 | 90 | 70 | 2.5 | 1.2 |
| Example 3 | 800 | 60 | 35 | 160 | 85 | 68 | 5 | 0.68 |
| Example 4 | 800 | 60 | 35 | 80 | 78 | 65 | 10 | 0.53 |
| Example 5 | 800 | 60 | 35 | 40 | 75 | 58 | 20 | 0.2 |
| Example 6 | 800 | 60 | 35 | 32 | 70 | 50 | 25 | 0.1 |
| Example 7 | 500 | 50 | 45 | 100 | 75 | 60 | 5 | 0.55 |
| Example 8 | 600 | 55 | 40 | 120 | 80 | 61 | 5 | 0.6 |
| Example 9 | 1000 | 65 | 30 | 200 | 87 | 66 | 5 | 0.8 |
| Example 10 | 1200 | 70 | 28 | 240 | 90 | 56 | 5 | 0.9 |
| Example 11 | 1500 | 75 | 25 | 300 | 95 | 50 | 5 | 1.1 |
| Comparative Example 1 | 800 | 60 | 35 | 800 | 100 | 100 | 1 | 2.2 |
| Comparative Example 2 | 800 | 60 | 35 | 27 | 63 | 37 | 29.6 | 0.08 |
| Comparative Example 3 | 1600 | 95 | 18 | 320 | 100 | 32 | 5 | 1.2 |
| Comparative Example 4 | 400 | 40 | 75 | 80 | 55 | 102 | 5 | 0.51 |
| Comparative Example 5 | 800 | 60 | 35 | / | / | / | / | / |

**Table 2**

| Item | Positive electrode sheet | | | | | | Battery | |
|---|---|---|---|---|---|---|---|---|
| | Elongation at break of current collector in MD (%) | Elongation at break of current collector in TD (%) | Tensile strength of current collector MD (MPa) | Tensile strength of current collector TD (MPa) | Shear force of electrode sheet(MPa) | U-shaped resistance after electrode sheet roll welding (mΩ) | DCR of battery cell (mΩ) | Nail penetration pass rate (%) |
| Example 1 | 85 | 80 | 198 | 189 | 0.55 | 128 | 0.65 | 100 |
| Example 2 | 82 | 78 | 192 | 185 | 0.53 | 115 | 0.58 | 100 |
| Example 3 | 100 | 96 | 188 | 183 | 0.48 | 96 | 0.51 | 100 |
| Example 4 | 103 | 98 | 182 | 179 | 0.46 | 88 | 0.48 | 100 |
| Example 5 | 105 | 100 | 180 | 178 | 0.45 | 86 | 0.45 | 100 |
| Example 6 | 106 | 101 | 181 | 177 | 0.31 | 72 | 0.43 | 80 |
| Example 7 | 121 | 119 | 166 | 163 | 0.45 | 90 | 0.5 | 100 |
| Example 8 | 107 | 104 | 180 | 178 | 0.48 | 91 | 0.52 | 100 |
| Example 9 | 87 | 83 | 201 | 192 | 0.51 | 89 | 0.49 | 100 |
| Example 10 | 84 | 80 | 192 | 188 | 0.54 | 81 | 0.45 | 100 |
| Example 11 | 78 | 73 | 182 | 180 | 0.55 | 70 | 0.42 | 80 |
| Comparative Example 1 | 45 | 42 | 177 | 170 | 0.66 | 188 | 1.2 | 100 |
| Comparative Example 2 | 105 | 100 | 181 | 179 | 0.26 | 56 | 0.36 | 20 |
| Comparative Example 3 | 66 | 58 | 168 | 165 | 0.57 | 48 | 0.32 | 0 |
| Comparative Example 4 | 130 | 125 | 144 | 141 | 0.45 | 210 | 1.6 | 100 |
| Comparative Example 5 | 100 | 101 | 182 | 177 | 0.41 | 45 | 0.33 | 20 |

From the above data, it can be seen that the positive electrode composite current collectors in various Examples of this application, by disposing the high-resistance layer on the surface of the conductive layer facing away from the polymer support layer and controlling the total sheet resistance R1 of the high-resistance layer and the conductive layer to be from 50 mΩ/□ to 80 mΩ/□, can maintain normal electrode conductivity of the conductive layer and keep the direct current resistance of the battery within an appropriate range while enabling the battery to achieve a relatively high nail penetration test pass rate, thereby improving the safety performance of the battery. Additionally, the positive electrode composite current collector exhibits relatively high elongation at break and relatively substantial tensile strength; and the positive electrode sheet can withstand relatively significant shear forces while having relatively low U-shaped resistance.

By comparing Examples 1 to 6, it can be seen that further controlling the total sheet resistance R1 of the high-resistance layer and the conductive layer within the range of 58 mΩ/□ to 70 mΩ/□, the thickness ratio A of the conductive layer to the high-resistance layer within the range of 2.5 to 20, and the total density M1 of the high-resistance layer and the conductive layer within the range of 75% to 90% enables the battery to have superior overall performance, achieving both relatively low direct current resistance and a relatively high nail penetration test pass rate, thus better balancing electrode conductivity and safety performance.

By comparing Example 1 with Comparative Example 1, it can be seen that when the thickness of the high-resistance layer increases, causing the thickness ratio A of the conductive layer to the high-resistance layer to be less than 2, the overall density of the high-resistance layer and the conductive layer approaches 100%, and the total sheet resistance R1 of the high-resistance layer and the conductive layer exceeds 80 mΩ/□, the overall conductivity of the positive electrode composite current collector decreases, leading to a significant increase in the U-shaped resistance of

the positive electrode sheet and a significant increase in the DCR of the battery cell. Although the battery cell can pass the nail penetration test, the positive electrode composite current collector can no longer meet the usage requirements of the positive electrode sheet and the battery cell. Additionally, due to the excessive thickness of the high-resistance layer material, cracking issues may occur, resulting in the elongation at break of the positive electrode composite current collector failing to meet requirements.

By comparing Example 1 with Comparative Example 2, it can be seen that when the thickness of the high-resistance layer decreases, causing the thickness ratio A of the conductive layer to the high-resistance layer to exceed 25, the high-resistance layer contributes little to the increase in the sheet resistance of the conductive layer, and the total sheet resistance R1 of the high-resistance layer and the conductive layer is less than 50 mΩ/□; although the U-shaped resistance of the positive electrode sheet is low and the DCR of the battery cell meets requirements, the nail penetration test pass rate of the battery cell significantly decreases. Moreover, due to the excessively thin high-resistance layer, the surface roughness of the high-resistance layer is relatively low, resulting in a relatively low shear force that the positive electrode sheet can withstand.

From Comparative Example 3, it can be seen that when the thickness of the conductive layer is too large, the sheet resistance of the conductive layer decreases, making the total sheet resistance of the high-resistance layer and the conductive layer too low; although the DCR of the battery cell can meet requirements, the nail penetration test pass rate of the battery cell is very low. From Comparative Example 4, it can be seen that when the thickness of the conductive layer is too small, the sheet resistance of the conductive layer increases, making the total sheet resistance of the high-resistance layer and the conductive layer too high; although the nail penetration test pass rate of the battery cell is relatively high, the U-shaped resistance of the positive electrode sheet and the DCR of the battery cell are too high, failing to meet usage requirements. By comparing Example 1 with Comparative Example 5, it can be seen that when no high-resistance layer is disposed on the conductive layer of the positive electrode composite current collector, the nail penetration test pass rate of the battery cell significantly decreases.

The descriptions of the various embodiments above tend to emphasize the differences between the embodiments, and their similarities or identical aspects can be cross-referenced for brevity and are not repeated herein.

It should be noted that this application is not limited to the above embodiments. The above embodiments are merely examples, and embodiments within the scope of the technical solution of this application that have substantially the same structure and achieve the same effects as the technical idea are included within the technical scope of this application. Additionally, within the scope of not departing from the gist of this application, various modifications that can be conceived by those skilled in the art applied to the embodiments and other configurations constructed by combining some constituent elements of the embodiments are also included within the scope of this application.

## Claims

**1.** A positive electrode composite current collector, comprising:

a polymer support layer;
a conductive layer disposed on at least one surface of the polymer support layer; and
a high-resistance layer disposed on a surface of the conductive layer facing away from the polymer support layer, wherein a resistivity of the high-resistance layer is higher than a resistivity of the conductive layer, a total sheet resistance of the high-resistance layer and the conductive layer is R1, and 50 mΩ/□ ≤ R1 ≤ 80 mΩ/□.

**2.** The positive electrode composite current collector according to claim 1, wherein 58 mΩ/□ ≤ R1 ≤ 70 mΩ/□.

**3.** The positive electrode composite current collector according to claim 1 or 2, wherein a sheet resistance of the conductive layer is R2, and 25 mΩ/□ ≤ R2 ≤ 45 mΩ/□.

**4.** The positive electrode composite current collector according to claim 3, wherein 30 mΩ/□ ≤ R2 ≤ 40 mΩ/□.

**5.** The positive electrode composite current collector according to any one of claims 1 to 4, wherein a thickness ratio of the conductive layer to the high-resistance layer is A, and 2 ≤ A ≤ 25.

**6.** The positive electrode composite current collector according to claim 5, wherein 2.5 ≤ A ≤ 20.

**7.** The positive electrode composite current collector according to any one of claims 1 to 6, wherein a thickness of the conductive layer is D1, and 500 nm ≤ D1 ≤ 1500 nm.

8. The positive electrode composite current collector according to claim 7, wherein 600 nm ≤ D1 ≤ 1200 nm.

9. The positive electrode composite current collector according to any one of claims 1 to 8, wherein a thickness of the high-resistance layer is D2, and 30 nm ≤ D2 ≤ 500 nm.

10. The positive electrode composite current collector according to claim 9, wherein 35 nm ≤ D2 ≤ 400 nm.

11. The positive electrode composite current collector according to any one of claims 1 to 10, wherein a total density of the conductive layer and the high-resistance layer is M1, and 70% ≤ M1 ≤ 95%.

12. The positive electrode composite current collector according to claim 11, wherein 75% ≤ M1 ≤ 90%.

13. The positive electrode composite current collector according to any one of claims 1 to 12, wherein a density of the conductive layer is M2, and 50% ≤ M2 ≤ 75%.

14. The positive electrode composite current collector according to claim 13, wherein 55% ≤ M2 ≤ 70%.

15. The positive electrode composite current collector according to any one of claims 1 to 14, wherein a material of the high-resistance layer comprises one or more of aluminum oxide, silicon oxide, nickel-chromium alloy, and iron-chromium-aluminum alloy.

16. The positive electrode composite current collector according to any one of claims 1 to 15, wherein a material of the conductive layer comprises one or more of aluminum, aluminum alloy, nickel, nickel alloy, titanium, titanium alloy, silver, and silver alloy.

17. The positive electrode composite current collector according to any one of claims 1 to 16, wherein a surface roughness Rz of a surface of the high-resistance layer facing away from the conductive layer is 0.1 μm to 2 μm.

18. The positive electrode composite current collector according to any one of claims 1 to 17, further comprising:
an adhesive layer disposed between the polymer support layer and the conductive layer.

19. The positive electrode composite current collector according to claim 18, wherein the adhesive layer comprises an adhesive, the adhesive comprising one or more of a composition containing multifunctional isocyanate and polyester polyol compounds, polyurethane, epoxy resin, polyacrylate, polyvinyl acetate, unsaturated polyester, phenolic resin, urea-formaldehyde resin, modified polyolefin resin, silicone resin, ethylene-acrylic acid copolymer, ethylene-vinyl acetate copolymer, ethylene-vinyl alcohol copolymer, acrylic resin, polycarbonate, and polyamide.

20. The positive electrode composite current collector according to claim 18 or 19, further comprising:
a passivation layer, wherein the passivation layer is disposed between the adhesive layer and the conductive layer.

21. The positive electrode composite current collector according to claim 20, wherein a material of the passivation layer comprises one or more of chromate, dichromate, organic phosphonate, $Al_2O_3$, $SiO_2$, and $Si_3N_4$.

22. The positive electrode composite current collector according to claim 21, wherein the chromate comprises one or more of sodium chromate, potassium chromate, magnesium chromate, and silver chromate.

23. The positive electrode composite current collector according to claim 21 or 22, wherein the dichromate comprises one or more of sodium dichromate, potassium dichromate, magnesium dichromate, and silver dichromate.

24. The positive electrode composite current collector according to any one of claims 21 to 23, wherein the organic phosphonate comprises one or more of hydroxyethylidene diphosphonic acid, diethylenetriamine penta(methylene phosphonic acid), triethylenetetramine hexa(methylene phosphonic acid), and ethylenediamine tetra(methylene phosphonic acid).

25. The positive electrode composite current collector according to any one of claims 20 to 24, wherein a thickness of the passivation layer is D4, and 1 nm ≤ D4 ≤ 500 nm.

26. The positive electrode composite current collector according to claim 25, wherein 10 nm ≤ D4 ≤ 200 nm.

**27.** The positive electrode composite current collector according to any one of claims 1 to 26, wherein a material of the polymer support layer comprises one or more of polyamide, polyimide, polyethylene terephthalate, polybutylene terephthalate, polyethylene naphthalate, polycarbonate, polyethylene, polypropylene, polypropylene-styrene copolymer, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene oxide, polyphenylene sulfide, polyethylene glycol, polysulfide nitride polymer materials, polybenzene, polypyrrole, polyaniline, polythiophene, polypyridine, cellulose, starch, protein, epoxy resin, phenolic resin, and their derivatives, cross-linked products, or copolymers.

**28.** A positive electrode sheet, comprising a positive electrode active material layer and the positive electrode composite current collector according to any one of claims 1 to 27, wherein the positive electrode active material layer is disposed on a surface of the high-resistance layer facing away from the conductive layer.

**29.** A secondary battery, comprising the positive electrode composite current collector according to any one of claims 1 to 27 or the positive electrode sheet according to claim 28.

**30.** An electrical apparatus, comprising the secondary battery according to claim 29.

1
13
12
15
14
11
14
15
12
13

FIG. 1

2
21
13
12
15
14
11
14
15
12
13
21

FIG. 2

5

FIG. 3

5
53
52
52
51

FIG. 4

6

FIG. 5

**INTERNATIONAL SEARCH REPORT**

International application No. **PCT/CN2024/091995**

**A. CLASSIFICATION OF SUBJECT MATTER**

H01M4/131(2010.01)i；H01M4/136(2010.01)i；H01M10/0525(2010.01)i

According to International Patent Classification (IPC) or to both national classification and IPC

**B. FIELDS SEARCHED**

Minimum documentation searched (classification system followed by classification symbols)

IPC:H01M4/-; H01M10/-

Documentation searched other than minimum documentation to the extent that such documents are included in the fields searched

Electronic data base consulted during the international search (name of data base and, where practicable, search terms used)

CNABS, CNTXT, ENTXTC, OETXT, VEN, WPABSC, CNKI, ISI Web of Science: 穿钉, 穿钉测试, 穿钉实验, 穿钉通过率, 导电层, 电阻, 电阻层, 电阻率, 多层, 二次电池, 方阻, 复合, 高阻层, 极板, 集流体, 铝, 镍, 镍铬合金, 氧化硅, 氧化铝, 银, 正极, 钛, nailing, square resistance, current collector, secondary battery, nailing experiment

**C. DOCUMENTS CONSIDERED TO BE RELEVANT**

| Category* | Citation of document, with indication, where appropriate, of the relevant passages | Relevant to claim No. |
|---|---|---|
| PX | CN 117577780 A (NINGDE AMPEREX TECHNOLOGY LTD.) 20 February 2024 (2024-02-20) claims 1-11 | 1-30 |
| A | CN 112290029 A (CONTEMPORARY AMPEREX TECHNOLOGY CO., LTD.) 29 January 2021 (2021-01-29) entire document | 1-30 |
| A | CN 108110216 A (SHANDONG GOLDENCELL ELECTRONICS TECHNOLOGY CO., LTD.) 01 June 2018 (2018-06-01) entire document | 1-30 |
| A | CN 216145647 U (XIAMEN HITHIUM NEW ENERGY TECHNOLOGY CO., LTD.) 29 March 2022 (2022-03-29) entire document | 1-30 |
| A | WO 2021000545 A1 (CONTEMPORARY AMPEREX TECHNOLOGY CO., LTD.) 07 January 2021 (2021-01-07) entire document | 1-30 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **17 July 2024** | **24 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
PCT/CN2024/091995

C. DOCUMENTS CONSIDERED TO BE RELEVANT

| Category* | Citation of document, with indication, where appropriate, of the relevant passages | Relevant to claim No. |
|---|---|---|
| A | WO 2023160252 A1 (CONTEMPORARY AMPEREX TECHNOLOGY CO., LTD.) 31 August 2023 (2023-08-31)<br>entire document | 1-30 |

Form PCT/ISA/210 (second sheet) (July 2022)

**INTERNATIONAL SEARCH REPORT**
**Information on patent family members**

International application No.
**PCT/CN2024/091995**

| Patent document cited in search report | | | Publication date (day/month/year) | Patent family member(s) | | | Publication date (day/month/year) |
|---|---|---|---|---|---|---|---|
| CN | 117577780 | A | 20 February 2024 | None | | | |
| CN | 112290029 | A | 29 January 2021 | None | | | |
| CN | 108110216 | A | 01 June 2018 | None | | | |
| CN | 216145647 | U | 29 March 2022 | None | | | |
| WO | 2021000545 | A1 | 07 January 2021 | EP | 3799170 | A1 | 31 March 2021 |
| | | | | EP | 3799170 | A4 | 03 November 2021 |
| | | | | EP | 3799170 | B1 | 21 February 2024 |
| | | | | US | 2021111412 | A1 | 15 April 2021 |
| | | | | US | 11621425 | B2 | 04 April 2023 |
| WO | 2023160252 | A1 | 31 August 2023 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311606664